**Europäisches Patentamt**

**European Patent Office**

**Office européen des brevets**

(19)

(11) Veröffentlichungsnummer : **0 397 092 B1**

(12) **EUROPÄISCHE PATENTSCHRIFT**

(45) Veröffentlichungstag der Patentschrift :
**28.10.92 Patentblatt 92/44**

(51) Int. Cl.$^5$ : **G01G 19/413**

(21) Anmeldenummer : **90108598.5**

(22) Anmeldetag : **07.05.90**

(54) **Preisrechnende elektronische Waage.**

(30) Priorität : **12.05.89 DE 3915645**

(43) Veröffentlichungstag der Anmeldung :
**14.11.90 Patentblatt 90/46**

(45) Bekanntmachung des Hinweises auf die
Patenterteilung :
**28.10.92 Patentblatt 92/44**

(84) Benannte Vertragsstaaten :
**AT DK ES FR GB IT NL SE**

(56) Entgegenhaltungen :
**EP-A- 0 034 485**
**AU-A- 438 080**
**DE-A- 3 802 660**
**DE-U- 8 700 968**
**US-A- 4 774 501**

(73) Patentinhaber : **Mettler-Toledo (Albstadt)
GmbH
Unter dem Malesfelsen 34
W-7470 Albstadt 1 - Ebingen (DE)**

(72) Erfinder : **Wallisch, Gebhard
Albstrasse 51
W-7453 Burladingen (DE)**
Erfinder : **Eismann, Dieter
Heubergstrasse 9
W-7475 Messstetten 1 (DE)**
Erfinder : **Matthes, Roland
Pestalozzistrasse 9
W-7474 Bitz (DE)**
Erfinder : **Kammerer, Manfred
Wilhelm-Keller Strasse 44
W-7470 Albstadt 1 (DE)**

(74) Vertreter : **Patentanwälte Leinweber &
Zimmermann
Rosental 7/II Aufg.
W-8000 München 2 (DE)**

## Beschreibung

Die Erfindung bezieht sich auf eine preisrechnende elektronische Waage mit einer Eingabetastatur aus einer eine Anzahl von jeweils einen Stromweg öffnenden bzw. schließenden Schaltkontaktelementen aufweisenden Schaltfolie und einer darauf angeordneten Tastenfolie, unter deren die Schaltkontakte betätigenden Tastenfeldern jeweils mindestens ein Schaltkontaktelement angeordnet ist, und mit einer an die Eingabetastatur angeschlossenen logischen Einrichtung zur Erkennung der Betätigung der einzelnen Tastenfelder aufgrund der von den darunter angeordneten Schaltkontaktelementen abgegebenen Schaltsignale und zur Auswertung jeder erfaßten Tastenfeldbetätigung in Abhängigkeit von dem als betätigt erkannten Tastenfeld.

Bei derartigen Waagen wird auf der Eingabetastatur der Preis pro Gewichtseinheit, beispielsweise der Kilopreis, des auf die Waage aufgelegten Wiegegutes eingegeben, wobei die logische Einrichtung aus dem solchermaßen eingegebenen Preis pro Gewichtseinheit selbsttätig den für das Wiegegut zutreffenden Endpreis berechnet. Insbesondere beim Einsatz der Waage als Selbstbedienungswaage werden üblicherweise die Tastenfelder der Tastatur als Symboltasten ausgebildet, indem die einzelnen Tastenfelder Symboldarstellungen (Piktogramme) tragen, die für den Selbstbediener alle Einzelwaren des insgesamt zur Selbstbedienung bereitgestellten Warensortimentes augenfällig kennzeichnen, so daß der Selbstbediener auf besonders einfache Weise durch die Betätigung eines einzigen Tastenfeldes den Preis pro Gewichtseinheit für das zu wägende Gut eingeben kann.

Bei einer bekannten Waage der eingangs genannten Art (DE-GM 87 00 968) ist bereits die Möglichkeit vorgesehen, die den einzelnen Tastenfeldern zugeordneten Beschriftungen oder Symbole in Anpassung an das jeweils bereitgestellte Warensortiment zu ändern. Derartige Änderungen des Warensortiments sind insbesondere bei Verkaufsständen für Obst oder Sonderangebote in Selbstbedienungsläden häufig der Fall. Da aber die Anzahl und Einteilung der Tastenfelder dabei unverändert bleibt, entspricht ihre festgelegte Anzahl und Größe einer bestimmten Maximalzahl von Einzelwaren in einem Warensortiment. Für Warensortimente, die eine kleinere Anzahl von Einzelwaren umfassen, bleibt daher ein Teil der Tastenfelder unbenutzt, wogegen es wünschenswert wäre, statt des unbenutzten Teils der Tastatur eine dem geringeren Warensortiment entsprechende geringere Anzahl von dafür größeren Tastenfeldern zur Verfügung zu stellen. Dies würde insbesondere die Lesbarkeit der Eingabetastatur verbessern.

Der Erfindung liegt die Aufgabe zugrunde, eine preisrechnende elektronische Waage der eingangs genannten Art dahingehend auszubilden, daß die Einteilung ihrer Eingabetastatur in Tastenfelder auf einfache Weise den jeweiligen Bedürfnissen angepaßt werden kann.

Erfindungsgemäß wird diese Aufgabe dadurch gelöst, daß für die Eingabetastatur unterschiedliche wahlweise auf die Schaltfolie auflegbare Tastenfolien vorgesehen sind, in denen die Tastenfelder jeweils in einer unterschiedlichen Einteilung angeordnet sind und jeweils unterschiedliche Gruppen von Schaltkontaktelementen überdecken, und daß die logische Einrichtung auf die jeweils aufgelegte Tastenfolie einstellbar ist und dadurch das Auftreten eines Schaltsignals von jedem der unter einem bestimmten Tastenfeld der jeweils aufgelegten Tastenfolie angeordneten Schaltkontaktelemente als Betätigung genau dieses Tastenfeldes auswertet.

Bei der Erfindung können also für die Eingabetastatur ein und derselben preisrechnenden elektronischen Waage beliebig eingeteilte Tastenfolien verwendet werden, die lediglich auf die Schaltfolie aufzulegen sind. Es ist lediglich erforderlich, daß jedes Tastenfeld ein oder mehrere Schaltkontaktelemente vollständig überdeckt, wodurch die Schaltkontaktelemente in voneinander verschiedene Gruppen aufgeteilt werden, von denen jede Gruppe genau einem Tastenfeld zugeordnet ist. Die Einteilung der Tastenfolie in die Tastenfelder kann hierdurch an die jeweiligen Bedürfnisse des Benutzers angepaßt werden. Ist die Zahl der in dem gesamten Warensortiment zu wiegender Waren vorhandenen Einzelwaren klein, kann eine entsprechend kleine Anzahl von dadurch entsprechend groß ausfallenden Tastenfeldern gewählt werden, wogegen mit einem Anwachsen der Gesamtzahl der mit der Waage zu wiegenden Einzelwaren die Anzahl der Tastenfelder steigen muß und wegen der gleichbleibenden Anzahl der insgesamt vorhandenen Schaltkontaktelemente bzw. der gleichbleibenden Fläche der Schaltfolie und der Tastenfolie die Größe der einzelnen Tastenfelder entsprechend abnehmen muß. Die Tastenfelder einer einzelnen Tastenfolie können untereinander von verschiedener Größe sein, und es ist jede Form der Tastenfelder möglich, die zu einer eindeutigen Einteilung der Schaltkontaktelemente in die Gruppen führt.

Da die logische Einrichtung auf die jeweils aufgelegte Tastenfolie derart einstellbar ist, daß sie das Auftreten eines Schaltsignals von einem oder mehreren der zu einer bestimmten Gruppe gehörenden Schaltkontaktelemente als Betätigung genau des diese Gruppe überdeckenden Tastenfeldes wertet, erfaßt die logische Einrichtung also in eindeutiger Weise die Betätigung jedes Tastenfeldes und erhält damit die nötige Information für die Berechnung des Endpreises des auf die Waage aufgelegten Wiegegutes. Denn es ist in der logischen Einrichtung jedem Tastenfeld ein bestimmter Preis pro Gewichtseinheit zugeordnet, und die Betätigung eines bestimmten Tastenfeldes führt somit zur Auswahl des der Gewichtsberechnung zugrunde zu legenden Operanden für den Preis pro Einheit, beispielsweise den Kilopreis.

In einer bevorzugten Ausführungsform ist vorgesehen, daß die logische Einrichtung eine programmierbare Einrichtung aufweist, durch deren Programmierung für jede der Tastenfolien die Zuordnung zwischen allen Schaltsignalen jeder von je einem bestimmten Tastenfeld überdeckten Gruppe von Schaltkontaktelementen und dem betreffenden Tastenfeld festgelegt wird. Hierdurch läßt sich die Einstellung der logischen Einrichtung auf die jeweils aufgelegte Tastenfolie besonders einfach und flexibel ausführen. Sobald die Einteilung der Tastenfolie in die Tastenfelder wunschgemäß erfolgt ist, braucht in der programmierbaren Einrichtung lediglich die Zuordnung zwischen jeder Gruppe von Schaltkontaktelementen und dem diese Gruppe überdeckenden Tastenfeld durch Programmierung eingestellt zu werden. Dies führt zu einem besonders einfachen Aufbau, da für die verschiedenen Tastenfolien keine Umschaltung zwischen entsprechend angepaßten Logikbausteinen in der logischen Einrichtung erfolgen muß. Auch stellt diese Programmierung keine hohen Anforderungen, so daß sie von jedem Anwender selbst ausgeführt werden kann.

Gemäß einem weiteren Gedanken der Erfindung ist auch vorgesehen, daß jeder der unterschiedlich eingeteilten Tastenfolien ein bestimmter, in die logische Einrichtung eingebbarer Identifikationskode zugeordnet ist, durch dessen Eingabe die logische Einrichtung selbsttätig auf die betreffende Tastenfolie eingestellt wird. Hierdurch wird auch die Einstellung der logischen Einrichtung auf die verschiedenen Tastenfolien automatisiert. Der jeder Tastenfolie zugeordnete Identifikationskode führt dabei zu einer entsprechenden Umschaltung oder Umprogrammierung der logischen Einrichtung in Anpassung an die gerade gewählte Tastenfolie. Der mit dem Wechsel der Tastenfolie verbundene Arbeitsaufwand reduziert sich somit für den Anwender auf das bloße Eingeben des betreffenden Identifikationskodes.

In diesem Zusammenhang besteht eine weitere vorteilhafte Ausgestaltung der Erfindung darin, daß die logische Einrichtung eine Abtasteinrichtung zum automatischen Einlesen des in abtastbarer Form angeordneten Identifikationskodes aufweist. Der Anwender ist hierdurch der restlichen Mühe enthoben, beim Wechsel der Tastenfolie den Identifikationskode, beispielsweise mittels der Eingabetastatur, selbst einzugeben, weil dies durch die Abtasteinrichtung selbsttätig erfolgt.

Während es also erwünscht ist, die Tastenfolie einfach von der Schaltfolie der Eingabetastatur abnehmen zu können, muß die Deckungsgenauigkeit zwischen ihren Tastenfeldern und den diesen zugeordneten Gruppen von Schaltkontaktelementen sichergestellt sein. Im Rahmen der Erfindung ist daher vorgesehen, daß die auf der Schaltfolie aufliegende Tastenfolie durch Halteelemente gegen eine Verschiebung in der Ebene der Schaltfolie gesichert ist.

In einer zweckmäßigen Ausführungsform der Eingabetastatur ist auch vorgesehen, daß zwischen der Tastenfolie und der Schaltfolie eine Noppenfolie angeordnet ist, die an ihren zu den Schaltkontaktelementen deckungsgleichen Stellen mit aus der Folienebene hervortretenden Verdickungsnoppen versehen ist. Hierdurch wird die Funktionssicherheit erhöht, weil die Verdickungsnoppen den von den darüberliegenden Tastenfeldern ausgehenden Druck gezielt auf die Schaltkontaktelemente übertragen und hierdurch sicherstellen, daß diese auf die Betätigung des jeweiligen Tastenfeldes gut ansprechen.

Die Abgrenzung der Tastenfelder auf der Tastenfolie kann auf jede Weise erfolgen, die zur Kenntlichmachung der Tastenfelder geeignet ist. Eine bevorzugte Möglichkeit besteht darin, daß die Tastenfelder auf die Tastenfolie aufgedruckt sind. Alternativ kann auch vorgesehen sein, daß die Oberfläche der Tastenfelder gegenüber der Ebene der Tastenfolie einen Höhenunterschied aufweist. Während bei der erstgenannten Möglichkeit die Oberfläche der Tastenfelder mit der Ebene der Tastenfolie bündig ist, ragen bei der letztgenannten Alternative die Tastenfelder aus der Ebene der Tastenfolie heraus. Dies läßt sich beispielsweise durch Prägen der Tastenfolie erreichen.

Für die Beschriftung der Tastenfelder, d. h. die Anbringung der Symbole oder Piktogramme oder sonstigen Bezeichnungen, sind ebenfalls verschiedene Möglichkeiten denkbar. Eine davon besteht darin, daß die Tastenfolie im Bereich der Tastenfelder durchsichtig ausgebildet und mit einer Schriftträgerfolie hinterlegt ist. Alternativ kann jedoch auch vorgesehen sein, daß die Tastenfolie im Bereich der Tastenfelder als Schriftträger ausgebildet ist. In beiden Fällen können die Schriftträgerfolie bzw. die als Schriftträger dienenden Tastenfelder mit der gewünschten Bezeichnung bedruckt sein oder dazu geeignet sein, von dem Anwender selbst mit einem Schreibgerät geeignet beschriftet zu werden. Auch ein Prägen der Tastenfelder, allein oder in Verbindung mit einer Einfärbung, kommt beispielsweise in Betracht, um die gewünschten Bezeichnungen anzubringen.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:

Fig. 1 ein Blockschaltbild einer preisrechnenden elektronischen Waage,

Fig. 2(a) und 2(b) eine obere bzw. eine untere Ansicht einer Schaltfolie einer bei der in Fig. 1 dargestellten Waage vorgesehenen Eingabetastatur,

Fig. 3(a) und 3(b) Aufsichten auf eine Tastenfolie mit regelmäßig eingeteilten Tastenfeldern bzw. eine Tastenfolie mit unregelmäßig eingeteilten Tastenfeldern zur Verwendung in der Eingabestatur von Fig. 2, und

Fig. 4 eine in der Eingabetastatur von Fig. 2 verwendbare Noppenfolie.

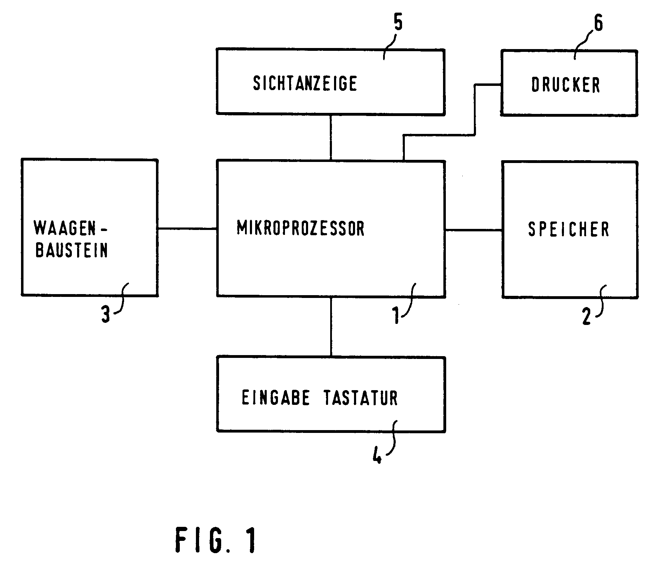

Eine in dem schematischen Blockschaltbild von Fig. 1 dargestellte preisrechnende elektronische Waage weist eine durch einen Mikroprozessor 1 mit einem daran angeschlossenen Speicher 2 gebildete logische Einrichtung auf, an die eingangsseitig einerseits ein Waagenbaustein 3 zur Eingabe des Gewichtswertes eines auf den Waagenbaustein aufgelegten Wiegegutes und andererseits eine Eingabetastatur 4 zur Eingabe eines Preises pro Gewichtseinheit, beispielsweise eines Kilogrammpreises, angeschlossen ist. Ausgangsseitig ist in dem dargestellten Ausführungsbeispiel an den Mikroprozessor 1 eine Sichtanzeige 5 zur Anzeige des von dem Mikroprozessor 1 errechneten Preises des Wiegegutes und ein Drucker 6 zum Drucken eines Preisetiketts angeschlossen. Der Speicher 2 enthält insbesondere das Betriebsprogramm für den Mikroprozessor 1.

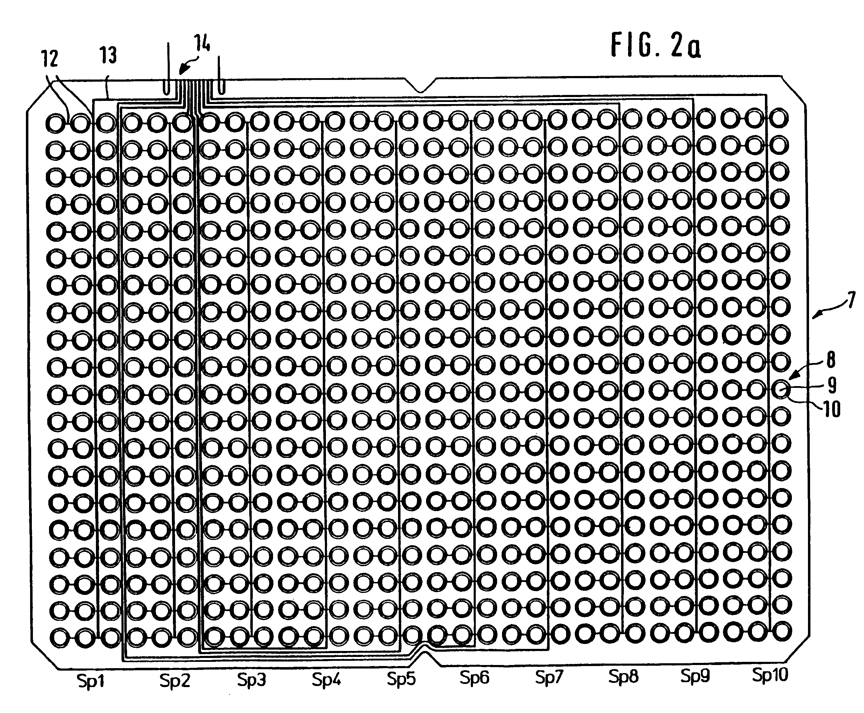

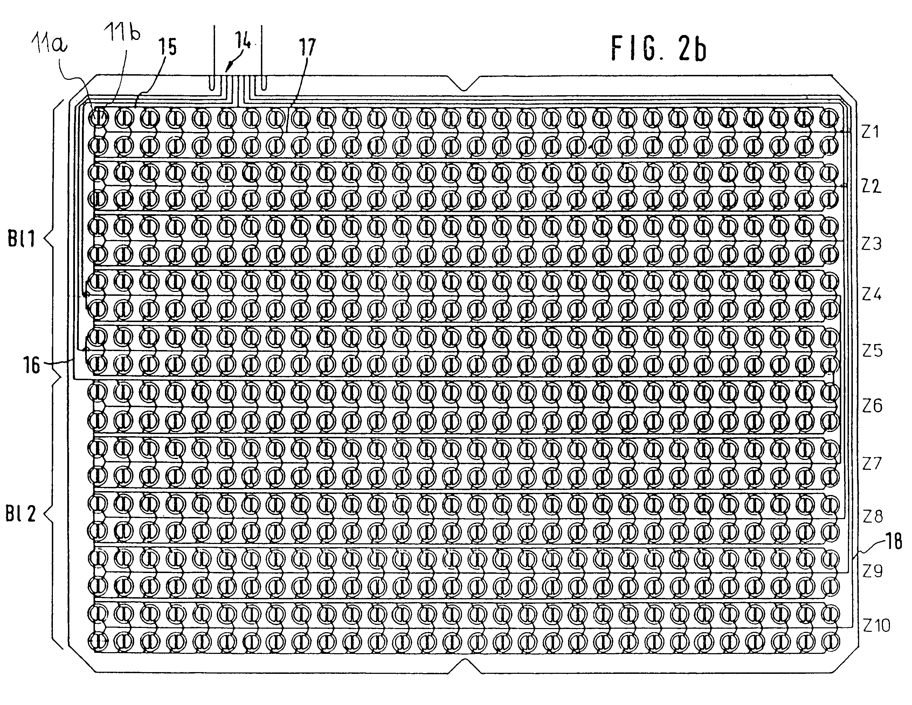

Die Eingabetastatur 4 weist eine in Fig. 2a und 2b dargestellte Schaltfolie 7 auf, deren Schaltkontaktelemente 8 gemäß einem regelmäßigen Rechteckraster angeordnet sind. In dem dargestellten Ausführungsbeispiel umfaßt das Raster in der Richtung der längeren Rechteckseite insgesamt 30 und in der Richtung der kürzeren Rechteckseite insgesamt 20 Schaltkontaktelemente 8. Im einzelnen weist gemäß der Darstellung von Fig. 2a, welche die Schaltfolie 7 in bezug auf die Eingabetastatur 4 von oben gesehen zeigt, jedes Schaltkontaktelement 8 eine obere Kontaktfläche 9 auf, die jeweils über einer in der Schaltfolie 7 ausgebildeten Bohrung 10 angeordnet ist. Jeder dieser oberen Kontaktflächen 9 der Schaltkontaktelemente 8 steht an der der oberen Seite entgegengesetzten Unterseite der Schaltfolie 7 gemäß Fig. 2b eine in zwei Halften 11a, 11b unterteilte untere Kontaktfläche gegenüber.

Wie ferner aus Fig. 2a hervorgeht, sind in dem dargestellten Ausführungsbeispiel, in der Richtung der längeren Rechteckseite gesehen, je drei obere Kontaktflächen 9 durch sich dazwischen erstreckende Leiterbahnstücke 12 untereinander verbunden und die solchermaßen gebildeten, sich in der Richtung der kürzeren Rechteckseite erstreckenden Reihen von Triaden von oberen Kontaktflächen 9 durch jeweils eine Leiterbahn 13 zu einem Anschluß 14 am Rand der Schaltfolie 7 herausgeführt. Die oberen Kontaktflächen 9 sind somit zu zehn Spalten Sp1 bis Sp10 mit je 20 Triaden von oberen Kontaktflächen 9 zusammengefaßt und pro Spalte durch eine Leiterbahn 13 zum Anschluß 14 herausgeführt.

Dagegen sind gemäß Fig. 2b die unteren Kontaktflächen zunächst dadurch in zwei Blöcke B11 und B12 unterteilt, daß die in der bei mittiger Teilung längs der längeren Rechteckseite in der einen Hälfte der Schaltfolie 7 gelegenen unteren Kontaktflächen jeweils durch Leiterbahnen mit ihren linken Hälften 11a zusammengeschaltet und jeweils durch eine gemeinsame Leiterbahn 15 bzw. 16 zum Anschluß 14 herausgeführt sind. Die Leiterbahn 15 ist somit mit allen linken Hälften 11a des Blockes B11 verbunden, während die Leiterbahn 16 mit allen linken Hälften des Blockes B12 verbunden ist. Dagegen sind die sich längs der längeren Rechteckseite erstreckenden Reihen von rechten Hälften 11b der unteren Kontaktflächen durch Leiterbahnstücke 17 derart miteinander verbunden, daß je zwei einander unmittelbar benachbarte Reihen von rechten Hälften 11b zusammengeschaltet sind. Hierdurch sind die unteren Kontaktflächen zu zehn Zeilen Z1 bis Z10 zu je 60 rechten Hälften 11b zusammengeschaltet. Ferner sind die Zeilen Z1 und Z10 durch eine gemeinsame Leiterbahn 18 miteinander verbunden und zum Anschluß 14 herausgeführt. Dies ist gleichermaßen für die Paare der Zeilen Z2 und Z9, Z3 und Z8, Z4 und Z7 sowie Z5 und Z6 der Fall. Auch diese Zeilenpaare weisen also je eine gemeinsame Leiterbahn 18 zur Verbindung mit dem Anschluß 14 auf. Trotz dieser paarweisen Zusammenschaltung der Zeilen sind diese jedoch einzeln identifizierbar, weil die Zeilen jedes Paares unterschiedlichen Blöcken B11 bzw. B12 angehören und somit durch die die Blöcke identifizierenden Leiterbahnen 15 bzw. 16 voneinander unterschieden werden können.

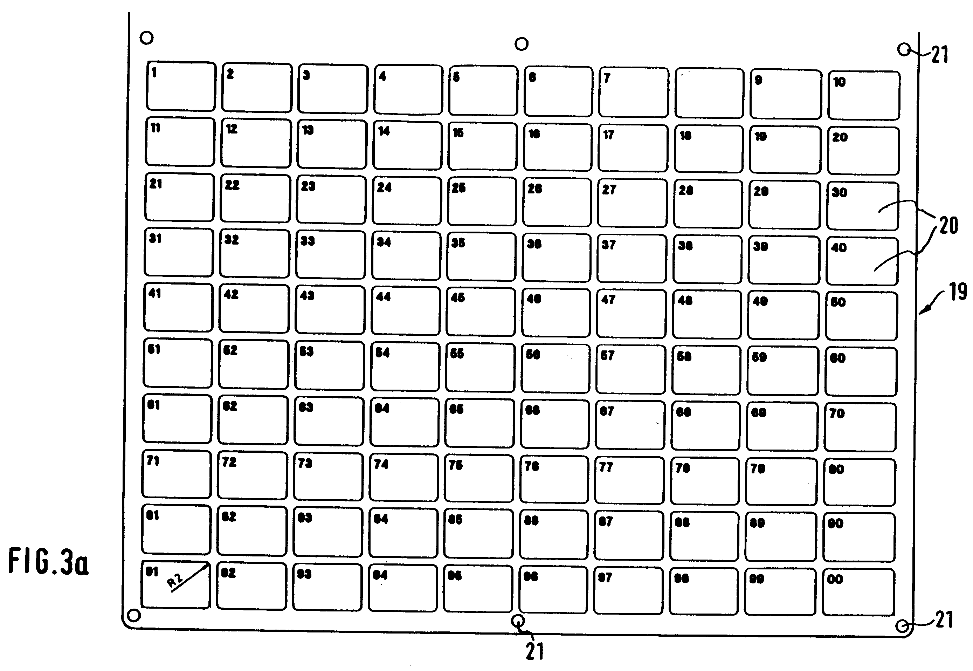

Aus der vorstehend beschriebenen Anordnung der oberen und unteren Kontaktflächen 9 bzw. 11a, 11b ist klar, daß in dem dargestellten Ausführungsbeispiel die kleinste Gruppe getrennt ansprechbarer Schaltkontaktelemente 8 aus insgesamt sechs Schaltkontaktelementen 8 besteht, die in drei sich längs der längeren Rechteckseite mal zwei sich längs der kürzeren Rechteckseite erstreckenden Schaltkontaktelementen 8 angeordnet sind. Dementsprechend weist eine in Fig. 3a dargestellte Tastenfolie 19 eine regelmäßige Unterteilung in Tastenfelder 20 auf, die derart in einem rechteckigen Raster angeordnet und geformt sind, daß jedes Tastenfeld 20 genau eine dieser kleinsten Gruppen von je sechs Schaltkontaktelementen 8 überdeckt, wenn die Tastenfolie 19 auf die Schaltfolie 7 aufgelegt wird. Somit weist die Tastenfolie 19 ein Muster von 10 x 10 rechteckigen Tastenfeldern 20 auf. Diese sind in Fig. 3a mit den Ziffern 1 bis 99 und 00 durchnumeriert.

Zur Sicherung der Deckungsgleichheit zwischen den Tastenfeldern 20 und den darunterliegenden Gruppen von Schaltkontaktelementen 8 ist die Tastenfolie 19 längs ihres Randes mit Positionierungslöchern 21 versehen, durch die nicht dargestellte Positionierungsstifte der Eingabetastatur 4 hindurchragen, wenn die Tastenfolie 19 auf die in der Eingabetastatur 4 angeordnete Schaltfolie 7 aufgelegt wird.

Somit dienen die Positionierungsstifte als Halteelemente, die eine Verschiebung der Tastenfolie 19 in der Ebene der Schaltfolie 7 verhindern.

Die Tastenfelder 20 können beispielsweise auf die Tastenfolie 19 aufgedruckt sein. Alternativ oder zusätzlich können sie auch durch Prägung gegenüber der Ebene der Tastenfolie 19 hervortreten oder zurückspringen. Die Tastenfolie 19 kann zumindest im Bereich der Tastenfelder 20 durchsichtig ausgebildet sein, so daß sie mit einer Schriftträgerfolie hinterlegt werden kann, die eine gewünschte Bezeichnung jedes Tastenfeldes 20 trägt und diese durch die durchsichtigen Tastenfelder 20 hindurchscheinen läßt. Alternativ können die Tastenfelder 20 selbst als Schriftträger dienen, wobei sie bedruckt oder handschriftlich mit der gewünschten Bezeichnung versehen werden können. Die gewünschte Bezeichnung kann auch durch Prägung der Tastenfelder 20 herbeigeführt werden.

Wenn die Tastenfolie 19 in der vorstehend beschriebenen Weise auf die Schaltfolie 7 aufgelegt ist, überträgt sich ein auf irgendeines der Tastenfelder 20 ausgeübter Druck durch die ggf. vorhandene Schriftträgerfolie hindurch auf eines oder mehrere der unter diesem Tastenfeld 20 liegenden Schaltkontaktelemente 8. Hierdurch gelangt die obere Kontaktfläche 9 durch die Bohrung 10 hindurch mit den Hälften 11a, 11b der unteren Kontaktfläche in Berührung und liefert dadurch ein Schaltsignal an den mit der Eingabetastatur 4 verbundenen Mikroprozessor 1. Da, wie vorstehend beschrieben, wegen des zeilen- und spaltenweisen Zusammenschlusses sowie der Blockunterteilung der Schaltkontaktelemente 8 die minimalen Gruppen von je sechs Schaltkontaktelementen 8 durch den Mikroprozessor 1 eindeutig identifiziert werden können, entspricht die Betätigung jedes Tastenfeldes 20 einer eindeutig identifizierten Information für den Mikroprozessor 1. Der Mikroprozessor 1 ist somit durch sein in dem Speicher 2 vorhandenes Betriebsprogramm dazu in der Lage, jedem bestimmten Tastenfeld 20 einen vorprogrammierten Preis pro Gewichtseinheit zuzuordnen. Wenn also ein Wiegegut auf der Waage liegt und der Benutzer das diesem Wiegegut zugeordnete Tastenfeld 20, das durch die dem Wiegegut entsprechende Beschriftung oder Symbolik erkenntlich ist, betätigt, steht mit Hilfe des Betriebsprogramms des Mikroprozessors 1 der der Preisberechnung zugrunde zu legende Preis pro Gewichtseinheit zur Verfügung. Durch den vom Waagenbaustein 3 gelieferten Gewichtswert sind somit alle Operanden für die in dem Mikroprozessor 1 erfolgende Gewichtsberechnung festgelegt.

Da bei dem vorstehend beschriebenen Ausführungsbeispiel je eine der Gruppen aus 3 x 2 Schaltkontaktelementen 8 ein Schaltsignal liefert, stellt die in Fig. 3a dargestellte Tastenfolie, die für jede dieser Gruppen je ein Tastenfeld 20 aufweist, die feinstmögliche Einteilung der Tastenfolie 19 in Tastenfelder 20 dar. Damit ergeben sich in dem dargestellten Ausführungsbeispiel insgesamt 100 Tastenfelder 20, mit denen somit insgesamt 100 verschiedene Preise pro Gewichtseinheit für 100 unterschiedliche Einzelwaren eines Warensortiments eingegeben werden können. Bei einer geringeren Anzahl von in einem bestimmten Warensortiment enthaltenen Einzelwaren ist es jedoch wünschenswert, ebenfalls die gesamte verfügbare Tastaturfläche auszunutzen und dafür eine geringere Anzahl entsprechend vergrößerter Tastenfelder zur Verfügung zu stellen.

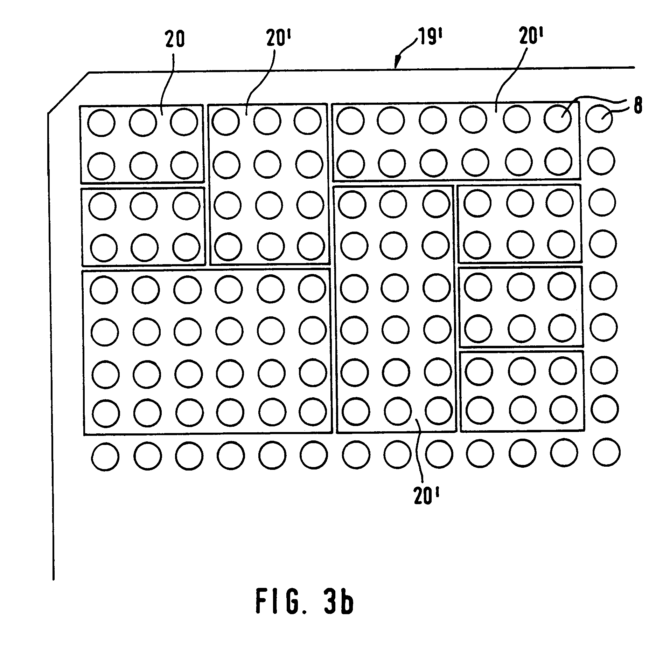

Zu diesem Zweck wird anstelle der in Fig. 3a dargestellten Tastenfolie 19 eine davon verschiedene Tastenfolie 19' aufgelegt, die beispielhaft in Fig. 3b dargestellt ist. Die Tastenfolie 19' weist sowohl Tastenfelder 20 auf, die, wie im Falle der Tastenfolie 19 von Fig. 3a, jeweils nur die minimale Gruppe von 3 x 2 Schaltkontaktelementen 8 überdecken, als auch vergrößerte Tastenfelder 20', die vergrößerte Gruppen von Schaltkontaktelementen 8 aus zwei oder mehr der minimalen Gruppen überdecken. Wird ein solches vergrößertes Tastenfeld 20' betätigt, kann wegen des dabei möglichen Ansprechens von zwei oder mehr der minimalen Gruppen von jeder dieser minimalen Gruppen ein Schaltsignal erzeugt werden. Daher ist vorgesehen, daß mit dem Wechsel von einer Tastenfolie 19 auf eine Tastenfolie 19' die logische Einrichtung 1,2 derart auf die neu aufgelegte Tastenfolie 19' eingestellt wird, daß sie das Auftreten der verschiedenen Schaltsignale einer von einem vergrößerten Tastenfeld 20' überdeckten vergrößerten Gruppe als Betätigung genau dieses Tastenfeldes 20' auswertet. Diese Einstellung ist in dem dargestellten Ausführungsbeispiel, bei dem die logische Einrichtung den Mikroprozessor 1 aufweist, besonders einfach möglich, da es nur einer entsprechenden Änderung des Betriebsprogramms, also einer entsprechenden Umprogrammierung, bedarf.

Diese Umprogrammierung der logischen Einrichtung 1,2 kann ohne weiteres dadurch erfolgen, daß die beim Übergang von einer Tastaturfolie zur anderen erforderlichen Programmänderungen im einzelnen beispielsweise über die Eingabetastatur 4 eingegeben werden. Schneller und einfacher läßt sich dies jedoch dadurch erreichen, daß jeder Tastenfolie 19,19' ein bestimmter Identifikationskode zugeordnet wird. Dieser Identifikationskode wird beim Wechsel der Tastenfolie in die logische Einrichtung 1,2 eingegeben, und die logische Einrichtung 1,2 ist dabei derart ausgebildet, daß sie aufgrund des eingegebenen Identifikationskodes, beispielsweise mittels eines geeigneten Erkennungsprogramms, die notwendige Einstellung bzw. Umprogrammierung selbsttätig vornimmt.

Um auch die Eingabe des Identifikationskodes beim Wechsel der Tastenfolie zu automatisieren, ist dieser in abtastbarer Form an der betreffenden Tastenfolie 19,19' angeordnet. Die logische Einrichtung 1,2 ist mit einer elektronischen Abtasteinrichtung (nicht dargestellt) versehen, die den Identifikationskode selbsttätig einliest.

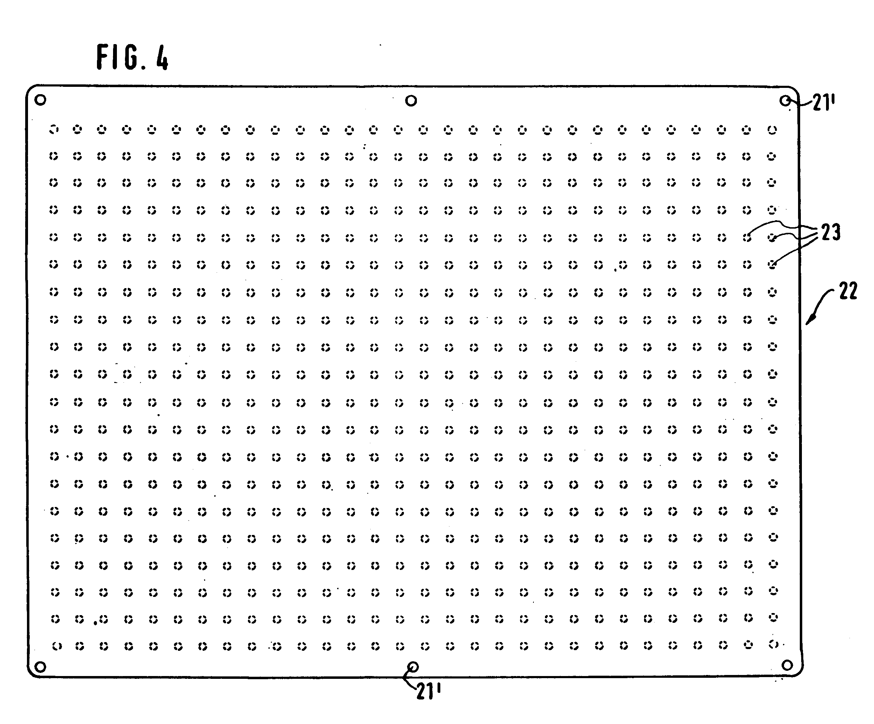

In dem vorstehend beschriebenen Ausführungsbeispiel liegt also die Tastenfolie 19,19′, ggf. unter Zwischenlegung einer dünnen Schriftträgerfolie, lose auf der Schaltfolie 7 auf und ist mit Hilfe der Positionierungslöcher 21 gegen eine seitliche Verschiebung gesichert. Zusätzlich kann zwischen die Schaltfolie 7 einerseits und Tastenfolie 19,19′ sowie ggf. Schriftträgerfolie andererseits eine in Fig. 4 dargestellte Noppenfolie 22 zwischengelegt werden, die mittels zu den Positionierungslöchern 21 der Tastenfolie 19,19′ deckungsgleichen Positionierungslöchern 21′ ebenfalls gegen eine seitliche Verschiebung in bezug auf die Schaltfolie 7 gesichert ist. Die Noppenfolie 22 weist deckungsgleich zu den Schaltkontaktelementen 8 der Schaltfolie 7 Verdickungsnoppen 23 auf, die aus der Folienebene hervortreten. Hierdurch wird der auf die Tastenfelder 20,20′ ausgeübte Betätigungsdruck gezielt auf die Schaltkontaktelemente 8 übertragen. Die Noppenfolie 22 kann aber auch leitende Verdickungsnoppen 23 aufweisen und mit einer als Leiterbahnfolie ausgebildeten Schaltfolie zur Lieferung der Schaltsignale zusammenwirken.

Die einzelnen, übereinanderliegenden Folien können also jederzeit ohne Werkzeug abgenommen werden, wodurch sowohl der Austausch einzelner Folien als auch die vorübergehende Abnahme zu Reinigungszwecken jederzeit leicht möglich ist.

**Patentansprüche**

1. Preisrechnende elektronische Waage mit einer Eingabetastatur (4) aus einer eine Anzahl von jeweils einen Stromweg öffnenden bzw. schließenden Schaltkontaktelementen aufweisenden Schaltfolie (7) und einer darauf angeordneten Tastenfolie (19,19′), unter deren die Schaltkontakte betätigenden Tastenfeldern jeweils mindestens ein Schaltkontaktelement angeordnet ist, und mit einer an die Eingabetastatur angeschlossenen logischen Einrichtung zur Erkennung der Betätigung der einzelnen Tastenfelder aufgrund der von den darunter angeordneten Schaltkontaktelementen abgegebenen Schaltsignale und zur Auswertung jeder erfaßten Tastenfeldbetätigung in Abhängigkeit von dem als betätigt erkannten Tastenfeld, dadurch **gekennzeichnet**, daß für die Eingabetastatur (4) unterschiedliche wahlweise auf die Schaltfolie (7) auflegbare Tastenfolien (19,19′) vorgesehen sind, in denen die Tastenfelder (20,20′) jeweils in einer unterschiedlichen Einteilung angeordnet sind und jeweils unterschiedliche Gruppen von Schaltkontaktelementen (8) überdecken, und daß die logische Einrichtung (1,2) auf die jeweils aufgelegte Tastenfolie (19,19′) einstellbar ist und dadurch das Auftreten eines Schaltsignals von jedem der unter einem bestimmten Tastenfeld (20,20′) der jeweils aufgelegten Tastenfolie (19,19′) angeordneten Schaltkontaktelemente (8) als Betätigung genau dieses Tastenfeldes (20,20′) auswertet.

2. Preisrechnende elektronische Waage nach Anspruch 1, dadurch gekennzeichnet, daß die logische Einrichtung (1,2) eine programmierbare Einrichtung aufweist, durch deren Programmierung für jede der Tastenfolien (19,19′) die Zuordnung zwischen allen Schaltsignalen jeder von je einem bestimmten Tastenfeld (20,20′) überdeckten Gruppe von Schaltkontaktelementen (8) und dem betreffenden Tastenfeld festgelegt wird.

3. Preisrechnende elektronische Waage nach Anspruch 1 oder 2, dadurch gekennzeichnet, daß jeder der unterschiedlich eingeteilten Tastenfolien (19,19′) ein bestimmter, in die logische Einrichtung (1,2) eingebbarer Identifikationskode zugeordnet ist, durch dessen Eingabe die logische Einrichtung (1,2) selbsttätig auf die betreffende Tastenfolie (19,19′) eingestellt wird.

4. Preisrechnende elektronische Waage nach Anspruch 3, dadurch gekennzeichnet, daß die logische Einrichtung (1,2) eine Abtasteinrichtung zum automatischen Einlesen des in abtastbarer Form angeordneten Identifikationskodes aufweist.

5. Preisrechnende elektronische Waage nach einem der Ansprüche 1 bis 4, dadurch gekennzeichnet, daß die auf der Schaltfolie (7) aufliegende Tastenfolie (19,19′) durch Halteelemente (21) gegen eine Verschiebung in der Ebene der Schaltfolie (7) gesichert ist.

6. Preisrechnende elektronische Waage nach einem der Ansprüche 1 bis 5, dadurch gekennzeichnet, daß zwischen der Tastenfolie (19,19′) und der Schaltfolie (7) eine Noppenfolie (22) angeordnet ist, die an ihren zu den Schaltkontaktelementen (8) deckungsgleichen Stellen mit aus der Folienebene hervortretenden Verdickungsnoppen (23) versehen ist.

7. Preisrechnende elektronische Waage nach einem der Ansprüche 1 bis 6, dadurch gekennzeichnet, daß die Tastenfelder (20,20′) auf die Tastenfolie (19,19′) aufgedruckt sind.

8. Preisrechnende elektronische Waage nach einem der Ansprüche 1 bis 7, dadurch gekennzeichnet, daß die Oberfläche der Tastenfelder (20,20′) gegenüber der Ebene der Tastenfolie (19,19′) einen Höhenunterschied aufweist.

9. Preisrechnende elektronische Waage nach einem der Ansprüche 1 bis 8, dadurch gekennzeichnet, daß die Tastenfolie (19,19′) im Bereich der Tastenfelder (20,20′) durchsichtig ausgebildet und mit einer Schriftträgerfolie hinterlegt ist.

10. Preisrechnende elektronische Waage nach einem der Ansprüche 1 bis 8, dadurch gekennzeichnet, daß die Tastenfolie (19,19′) im Bereich der Tastenfelder (20,20′) als Schriftträger ausgebildet ist.

**Claims**

1. Price-computing electronic weighing machine having an input keyboard comprising a switch sheet with a number of switching contact elements each opening or closing a current path, and having a key sheet arranged on the said switch sheet, there being at least one switching contact element arranged under each of the keypads of the said key sheet, which keypads actuate the switching contacts, and having a logic device connected to the input keyboard for recognising the actuation of the individual keypads on the basis of the switching signals delivered by the switching contact elements arranged under the said keypads, and for evaluating each keypad actuation detected in dependence upon the keypad recognised as actuated, **characterised in that**, for the input keyboard (4), different key sheets (19, 19′) are provided which are selectively applicable to the switch sheet (7), in which key sheets (19, 19′) the keypads (20, 20′) are arranged so that they are divided differently in each case and cover respectively different groups of switching contact elements (8), and in that the logic device (1, 2) can be adjusted to the respectively applied key sheet (19, 19′), and because of this the occurrence of a switching signal from each of the switching contact elements (8) arranged under a pre-determined keypad (20, 20′) of the respectively applied key sheet (19, 19′) is interpreted as an actuation of precisely this keypad (19, 19′).

2. Price-computing electronic weighing machine according to claim 1, **characterised in that** the logic device (1, 2) has a programmable device, the programming of which, for each of the key sheets (19, 19′), establishes the assignment between all of the switching signals of each group of switching contact elements (8) covered by a respective pre-determined keypad (20, 20′), and the respective keypad.

3. Price-computing electronic weighing machine according to claim 1 or 2, **characterised in that**, to each of the differently divided key sheets (19, 19′), there is assigned a pre-determined identification code which can be entered into the logic device (1, 2), the input of which code automatically adjusts the logic device (1, 2) to the respective key sheet (19, 19′).

4. Price-computing electronic weighing machine according to claim 3, **characterised in that** the logic device (1, 2) has a scanning device for automatically reading in the identification code, which is arranged in a form which can be scanned.

5. Price-computing electronic weighing machine according to one of claims 1 to 4, **characterised in that** the key sheet (19, 19′) applied to the switch sheet (7) is secured by holding elements (21) against displacement in the plane of the switch sheet (7).

6. Price-computing electronic weighing machine according to one of claims 1 to 5, **characterised in that**, between the key sheet (19, 19′) and the switch sheet (7), there is arranged a nubbed sheet (22) which is provided, in the places thereon which are coincident with the switching contact elements (8), with thickening nubs (23) protruding from the sheet plane.

7. Price-computing electronic weighing machine according to one of claims 1 to 6, **characterised in that** the keypads (20, 20′) are printed on to the key sheet (19, 19′).

8. Price-computing electronic weighing machine according to one of claims 1 to 7, **characterised in that** the surface of the keypads (20, 20′) has a height different to the plane of the key sheet (19, 19′).

9. Price-computing electronic weighing machine according to one of claims 1 to 8, **characterised in that** the key sheet (19, 19′) is formed so that it is transparent in the region of the keypads (20, 20′), and is backed by a sheet for bearing characters.

10. Price-computing electronic weighing machine according to one of claims 1 to 8, **characterised in that** the key sheet (19, 19′) is formed for bearing characters in the region of the key pads (20, 20′).

## Revendications

1 - Balance électronique avec calculateur de prix, comprenant un clavier d'introduction formé par une feuille de commutation comprenant un certain nombre d'éléments de contact de commutation, chacun pour ouvrir ou fermer un trajet de courant, et par une feuille de touches disposée sur la feuille de commutation en dessous des zones de touche actionnant les contacts de commutation de laquelle est disposé chaque fois au moins un élément de contact de commutation, et un dispositif logique relié au clavier d'introduction pour reconnaître l'actionnement des différentes zones de touche sur la base des signaux de commutation donnés par les éléments de contact de commutation disposés en dessous et pour l'exploitation de chaque actionnement de zone de touche reconnu, en fonction de la zone de touche reconnue comme ayant été actionnée, caractérisée en ce que pour le clavier d'introduction (4) sont prévues des feuilles de touches (19,19') différentes pouvant être déposées au choix sur la feuille de commutation (7) et dans laquelle les zones de touche (20,20') sont disposées chaque fois selon une division différente et recouvrent chaque fois des groupes différents d'éléments de contact de commutation (8), et que le dispositif logique (1,2) est ajustable à l'égard de la feuille de touches (19,19') chaque fois déposée et grâce à cela exploite la production d'un signal de commutation de chacun des éléments de contact de commutation (8) disposés en dessous d'une zone de touche prédéterminée (20,20') de la feuille de touches (19,19') déposée, comme actionnement exactement de cette zone de touche (19,19').

2 - Balance électronique avec calculateur de prix, caractérisée en ce que le dispositif logique (1,2) comprend un dispositif programmable grâce à la programmation duquel est déterminée pour chaque feuille de touches (19,19') la corrélation entre tous les signaux de commutation de chaque groupe d'éléments de contact de commutation (8), recouvert respectivement d'une zone de touche prédéterminée (20,20') et de la zone de touche concernée.

3 - Balance électronique avec calculateur de prix, selon l'une des revendications 1 ou 2, caractérisée en ce qu'à chaque feuille de touches (19,19') différemment subdivisée est associé un code d'identification prédéterminé, susceptible d'être introduit dans le dispositif logique (1,2), par l'introduction duquel le dispositif logique (1,2) est adapté automatiquement à la feuille de touches respective.

4 - Balance électronique avec calculateur de prix, selon la revendication 3, caractérisée en ce que le dispositif logique (1,2), comprend un dispositif palpeur pour une lecture automatique du code d'identification disposé en une forme palpable.

5 - Balance électronique avec calculateur de prix, selon l'une des revendications 1 à 4, caractérisée en ce que la feuille de touches (19,19') reposant sur la feuille de commutation (7) est protégée par des éléments de retenue (21) contre un déplacement dans le plan de la feuille de commutation (7).

6 - Balance électronique avec calculateur de prix, selon l'une des revendications 1 à 5, caractérisée en ce qu'entre la feuille de touches (19,19') et la feuille de commutation (7) est disposée une feuille à noppes (22) qui est pourvue à ses emplacements de recouvrement des éléments de contact de commutation (8) de noppes de surépaisseur (23) faisant saillie du plan de feuille.

7 - Balance électronique avec calculateur de prix, selon l'une des revendications 1 à 6, caractérisée en ce que les zones de touche (20,20') sont imprimés sur la feuille de touches (19,19').

8 - Balance électronique avec calculateur de prix, selon l'une des revendications 1 à 7, caractérisée en ce que la surface des zones de touche (20,20') comprend une différence de hauteur par rapport au plan de la feuille de touches (19,19').

9 - Balance électronique avec calculateur de prix selon l'une des revendications 1 à 8, caractérisée en ce que la feuille de touches (19,19') est réalisée de façon à être transparente dans la partie des zones de touche (20,20') et est logée avec une feuille de support d'écriture.

10 - Balance électronique avec calculateur de prix selon l'une des revendications 1 à 8, caractérisée en ce que la feuille de touches (19,19') est réalisée sous forme d'un support d'écriture dans la région des zones de touche (20,20').

FIG. 1

FIG. 2a

EP 0 397 092 B1

FIG. 2b

11

FIG.3a

FIG. 3b

FIG. 4